(19) Europäisches Patentamt
European Patent Office
Office européen des brevets

(11) EP 3 080 212 B1

(12) **EUROPEAN PATENT SPECIFICATION**

(45) Date of publication and mention of the grant of the patent:
**20.03.2019 Bulletin 2019/12**

(21) Application number: **14827304.8**

(22) Date of filing: **09.12.2014**

(51) Int Cl.:
***C09D 133/12*** *(2006.01)* ***C09D 5/00*** *(2006.01)*
***C08G 65/336*** *(2006.01)* ***C08K 9/06*** *(2006.01)*
***C08K 9/08*** *(2006.01)* ***C09D 7/62*** *(2018.01)*
***C09D 7/40*** *(2018.01)*

(86) International application number:
**PCT/US2014/069306**

(87) International publication number:
**WO 2015/089045 (18.06.2015 Gazette 2015/24)**

(54) **STABLE PRIMER FORMULATIONS AND COATINGS WITH NANO DISPERSION OF MODIFIED METAL OXIDES**

STABILE PRIMERFORMULIERUNGEN UND BESCHICHTUNGEN MIT NANO DISPERSION DES MODIFIZIERTEN METALLOXIDE

FORMULATIONS DES PRIMAIRE STABLES ET DES REVÊTEMENTS AVEC DE NANODISPERSION DES OXYDES METALLIQUES MODIFIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2013 US 201314102880**

(43) Date of publication of application:
**19.10.2016 Bulletin 2016/42**

(73) Proprietor: **Momentive Performance Materials Inc.**
**Waterford, NY 12188 (US)**

(72) Inventors:
- **MURUGESAN, Karthikeyan**
**Bangalore**
**Karnataka 560102 (IN)**
- **RAMAKRISHNAN, Indumathi**
**Bangalore 560066 (IN)**
- **HAYES, Robert F.**
**Ballston Lake, NY 12019 (US)**
- **WELLER, Keith J.**
**Meguon, Wisconsin 53092 (US)**

(74) Representative: **Gille Hrabal**
**Brucknerstrasse 20**
**40593 Düsseldorf (DE)**

(56) References cited:
**EP-A- 0 263 428**
**EP-A1- 2 666 629**
**EP-A2- 0 732 356**
**WO-A2-2006/073856**
**US-A- 4 799 963**
**US-A1- 2006 172 136**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 080 212 B1

**Description**

FIELD OF THE INVENTION

The invention relates to stable primer formulations and coatings with nano-dispersion of modified metal oxides. The formulations produce films having excellent optical and adhesion characteristics, and high UV screening ability and thermal stability.

BACKGROUND OF THE INVENTION

Polymeric materials, such as polycarbonate, are promising alternatives to glass for use as structural materials in a variety of applications, including automotive, transportation and architectural glazing applications, where increased design freedom, weight savings, and improved safety features are in high demand. Plain polycarbonate substrates, however, are limited by their lack of abrasion, chemical, UV, and weather resistance, and therefore need to be protected with optically transparent coatings that alleviate above limitations in the aforementioned applications.

To impart abrasion resistance to the polymeric materials, polycarbonate substrates are in general coated with thermally curable silicone hardcoat. The poor weatherability of polycarbonate, on the other hand, is addressed with addition of organic or inorganic UV-absorbing materials in the silicone hardcoat layer. However, incorporation of UV absorbers, especially organic based, in the thermal curable silicone layer often leads to inferior abrasion resistance performance.

One approach to address the limited abrasion resistance performance associated with the use of organic UV-absorbing materials is to use inorganic UV-absorbing materials at least partially in lieu of organic absorbing materials. The expected benefit is to avoid the addition of large amount of organic material in the silicone hardcoat, thereby keeping abrasion resistance characteristics intact. In addition, given the photo and oxidative stability of inorganic UV-absorbing materials compared with organic UV absorbers, the use of inorganic UV-absorbing materials can potentially help to achieve weatherability for extended period of time.

Hardcoat compositions have been disclosed that can provide UV protection and abrasion resistance to the plastic substrates and enable them to go into outdoor applications. Organic UV absorbers incorporated in the coating formulations provide weatherability characteristics to the coating. However, inherent photodegradation and volatility of the organic absorbers limit the weatherability performance of these coatings over an extended period of time. Also, the addition of organic UV absorbers in primer formulations can reduce the glass transition temperature ($T_g$) of the primer due to plasticizing effect. This will limit the maximum temperature that the coated article can be subjected to while in service. Inorganic metal oxides like cerium oxide, titanium oxide, and zinc oxide particles can provide UV protection in coating formulations. However, incorporation of particles in the coating matrix can negatively affect the transparancy of the coatings due to large particle size (>200 nm diameter) and a high refractive index (RI) mismatch between particle and matrix. WO 2006/073856 A2 discloses ultraviolet curable compositions preferably containing discrete, crystalline zirconia nanoparticles with reactive, or copolymerizable surface modification in a polymerizable monomer/oligomer resin mixture. Therein, in the surface modification of the nanoparticles, acrylate and methacrylate functionality is preferred over non-reactive, or nonpolymerizable functionality. Mixtures containing a majority of nanoparticles ranging in size from 10-30 nm along with a minority of nanoparticles ranging in size from about 80-150 nm result in highly transparent and durable compositions. While commercially available inorganic nano particles are available in aqueous media, incorporation of these sols into non-aqueous polymer matrices/coating formulations often leads to conditions under which particle agglomeration occurs, resulting in unstable coating formulations.

It is therefore technically challenging to incorporate inorganic UV-absorbing materials in the form of a colloidal dispersion into an organic-based coating composition, either with or without the presence of colloidal silica in the coating composition. The challenges relate to the ability to obtain long-term stability of inorganic UV absorber dispersions, i.e. the ability to inhibit the agglomeration of colloidal particles of the inorganic UV absorbers. Stable dispersions of inorganic nano-particles at high concentrations provide the maximum UV screening properties and good coated film uniformity while maintaining transparency and abrasion resistance. For example, EP0732356A2 discloses the use of cerium oxide organosol derived from cerium oxide aqueous sol and the incorporation of cerium oxide nano-particles in the acrylic primer formulations. The prior art discloses that water is required as a cosolvent in the formulations to stabilize the cerium oxide nano particle in the organic polymer solutions. EP0732356A2 discloses in its examples, PMMA containing formulations having water to ceria weight ratios of 0.09 or greater. It should also be noted that PMMA containing formulations with low solids (2.3%) and low water content (<1.6%) were shown to give hazy primer films. While formulations with higher solids contents (≥5.9%) are disclosed, all examples presented have high water content (≥4.0%) and no information on coatings cast from primer formulation solutions with high solids content and low water content are disclosed. For practical applications, primer formulations of higher solid content and lower water content are preferred. In addition, while stable coating solutions are described and used to cast transparent, low haze, thin films, no information is given

on the length of the shelf stability of the coating formulations or the robustness of adhesion to polycarbonate in an extended water soak exposure. Such performance attributes are generally considered important if the coatings are to be deemed useful in applications requiring outdoor exposure. It is important to consider that water is an anti-solvent for PMMA as well as many other acrylic polymers, therefor it is important to limit the concentration of water in the primer formulation in order to prevent precipitation of the polymer resin from solution.

Hence, there is a continuing need for a protective coating method and composition for polymeric substrates that is effective to provide type abrasion resistance, long-term outdoor weatherability at a structure that is easier to manufacture than is currently available in the art to the knowledge of the present inventors. The present invention is believed to provide one answer to that need.

## SUMMARY OF THE INVENTION

In one aspect, the present invention is directed to a primer composition, comprising:

(a) cerium oxide nanoparticles surface-modified with an organofunctional silane moiety, said organofunctional silane moiety having the structure of Formula I or II,

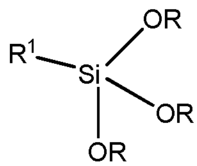

Formula (I)

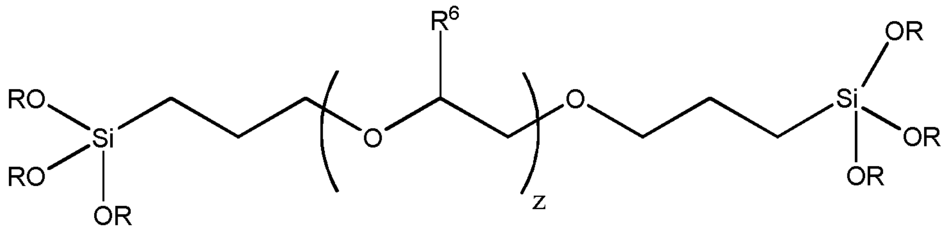

Formula (II)

wherein in Formula (I), $R^1$ is

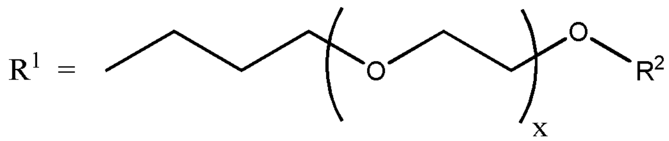

or

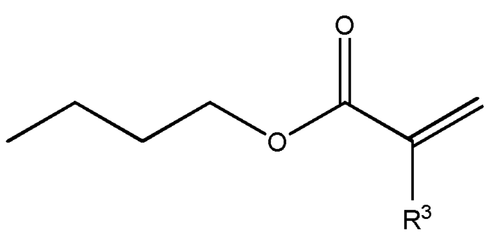

or

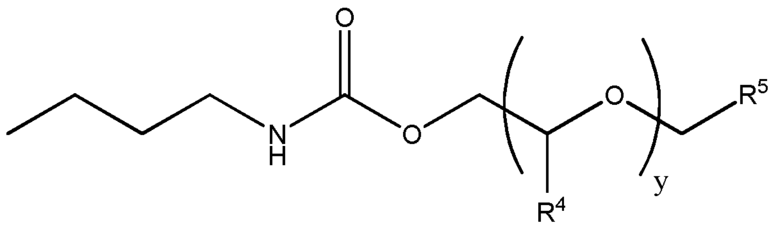

or wherein $R^1$ is a functional group-containing moiety, wherein said functional group-containing moiety of $R^1$ is selected from amino, carbamate, vinyl, amide, ester, carboxylate, and combinations thereof; wherein each R is an alkyl group having from 1 to 12 carbon atoms; wherein each $R^2$ and $R^5$ is independently $-CO-CH_3$; wherein each $R^3$, $R^4$ and $R^6$ is independently hydrogen or methyl; and, wherein x, y and z are each an integer independently selected from 1 to 50,

(b) an organic polymer; and

(c) one or more solvents.

Advantageously, the functional group-containing moiety of $R^1$ is selected from amino, carbamate, vinyl, amide, ester, carboxylate, and combinations thereof. Illustratively, the functional group-containing moiety of $R^1$ is suitably selected from $-CH_2CH_2CH_2NHCH_2CH_2NH_2$, $-CH_2CH_2CH_2NHC(O)OMe$, $-CH_2CH_2CH_2NHC(O)OEt$, $-CH=CH_2$, $-C(CH_3)=CH_2$, or the organofunctional silane moiety is selected from $(MeO)_a(EtO)_{3-a}SiCH_2CH_2NHC(O)C(CH_3)=CH_2$, $(i\text{-}PrO)_3SiCH_2CH_2CH_2OC(O)C(Me)=CH_2$, $(MeO)_3SiCH_2CH_2CH_2NHCH_2CH_2NHCH_2CH_2C(O)OMe$, $(i\text{-}PrO)_3SiCH_2CH_2CH_2OC(O)C(Me)=CH_2$, $(MeO)_3Si(CH_2)_3NHCH_2CH_2NH(CH_2)_3Si(OMe)_3$, $(EtO)_3SiCH_2CH_2CH_2OC(O)C(Me)=CH_2$, and combinations thereof.

In another aspect, the present invention is directed to a primer film on a substrate, comprising:

(a) about 0.1 to about 50 wt.% of cerium oxide nanoparticles surface-modified with an organofunctional silane moiety, said organofunctional silane moiety having the structure of Formula I or II:

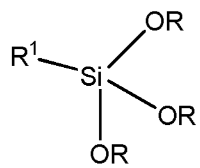

Formula (I)

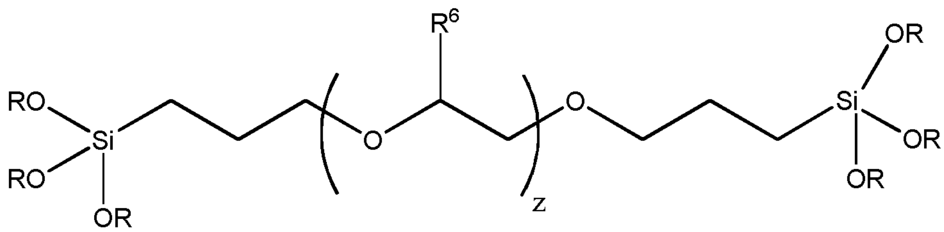

Formula (II)

wherein in Formula (I), $R^1$ is

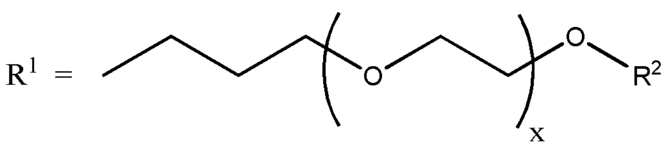

or

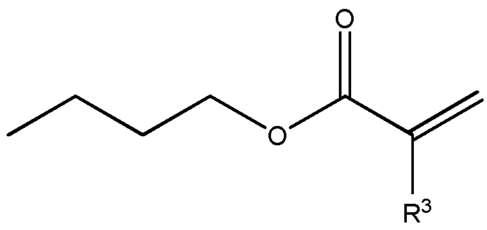

or

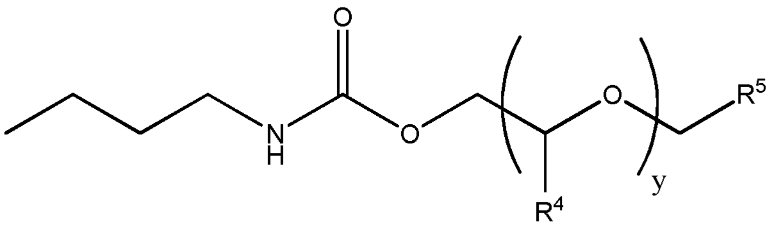

or wherein $R^1$ is a functional group-containing moiety, wherein said functional group-containing moiety of $R^1$ is selected from amino, carbamate, vinyl, amide, ester, carboxylate, and combinations thereof; wherein each R is an alkyl group having from 1 to 12 carbon atoms; wherein each $R^2$ and $R^5$ is independently $-CO-CH_3$; wherein each $R^3$, $R^4$ and $R^6$ is independently hydrogen or methyl; and, wherein x, y and z are each an integer independently selected from 1 to 50, and

(b) 50 to 99 wt% of an organic polymer, said weight percents being based on the total weight of said film.

Advantageously, the functional group-containing moiety of $R^1$ is selected from amino, carbamate, vinyl, amide, ester, carboxylate, and combinations thereof Illustratively, the functional group-containing moiety of $R^1$ is suitably selected from $-CH_2CH_2CH_2NHCH_2CH_2NH_2$, $-CH_2CH_2CH_2NHC(O)OMe$, $-CH_2CH_2CH_2NHC(O)OEt$, $-CH=CH_2$. $-C(CH_3)=CH_2$, or the organofunctional silane moiety is selected from $(MeO)_a(EtO)_{3-a}$ $SiCH_2CH_2NHC(O)C(CH_3)=CH_2$, $(i-PrO)_3SiCH_2CH_2CH_2OC(O)C(Me)=CH_2$, $(MeO)_3SiCH_2CH_2CH_2NHCH_2CH_2NHCH_2CH_2C(O)OMe$, $(i-PrO)_3SiCH_2CH_2CH_2OC(O)C(Me)=CH_2$, $(MeO)_3Si(CH_2)_3NHCH_2CH_2NH(CH_2)_3Si(OMe)_3$, $(EtO)_3SiCH_2CH_2CH_2OC(O)C(Me)=CH_2$, and combinations thereof.

In another aspect, the present invention is directed to a substrate, such as a polycarbonate or acrylate substrate, coated with the above primer composition

In another aspect, the present invention is directed to a substrate, such as a polycarbonate or acrylate substrate, coated with the above primer film. This substrate may also be coated with a silicone hardcoat.

In yet another aspect, the present invention is directed to an article comprising a substrate coated with the above primer film and overcoated with a silicone hardcoat.

## BRIEF DESCRIPTION OF THE FIGURES

The following detailed description of the invention will be better understood when taken in conjunction with the several Figures, in which:

Figure 1 is a graph showing UV absorbance of Ceria-containing primer formulations of the invention;
Figure 2 is a graph showing dynamic light scattering data for compositions of the invention;
Figure 3 is a TEM micrograph for the ceria containing primer of the invention (Primer formulation example 8, Table 2) with the Hardcoat assembly.

## DETAILED DESCRIPTION OF THE INVENTION

The present invention is directed to the use of surface modified inorganic nanoparticles as UV absorbers in a coating composition, replacing conventional organic UV absorbers. The inorganic nanoparticles are compatibilized with the primer matrix by modifying their surface with functionalized silane and dispersing them uniformly in the coating without agglomeration, thus minimizing the negative effects on the optical properties of the final coated substrate and

providing long shelf-life of the coating solution. The final coated substrates have good optical properties as well as good long term adhesion in harsh testing conditions. Functional silanes are used to modify the surface of cerium oxide, and stable nano cerium oxide sols were prepared in organic medium. The resulting primer coatings along with a silicone top coat exhibit higher transmittance, lower haze, and good adhesion to polycarbonate substrates under normal and harsh conditions as required for applications such as automotive and architectural glazing.

Nanoparticles in general can be defined as particles with the dimensions in the range of one to a few hundred nanometers. For clear coat applications, it is required that the size of the nanoparticle should be below a certain limit in order not to scatter light which is passing though the coating. It is generally understood that nano particles with dimensions less than $\lambda/2$ do not scatter light of $\lambda$, where $\lambda$ is the wavelength of light and therefore will not disrupt the transparency of the matrix in which they are incorporated. Hence particles with a diameter < 190 nm could be used in clear coats without disrupting the transmission or haze of visible light passing though the coating film.

The primer composition of the invention contains (a) metal oxide nanoparticles surface-modified with an organofunctional silane moiety; (b) an organic polymer; and (c) one or more solvents. Each of these components is described in more detail below.

metal oxide nanoparticles are cerium oxide nanoparticles. The amount of the cerium oxide nanoparticles surface-modified with an organofunctional silane moiety in the composition of the invention ranges preferably from 0.1 to 10 wt%, more preferably from 0.1 to 5 wt.%, and most preferably from 0.5 to 3 wt.%, all based on the total weight of the composition. Without wishing to be bound by any particular theory, the nature of the binding forces between the cerium oxide and the organofunctional moiety is believed to be noncovalent binding. Further, the individual silane moieties are believed to offer physical stability to the surface-modified nanoparticles in suspension due to steric repulsion attributable to the silane moieties.

The organofunctional silane moiety used in the composition of the invention preferably has the structure of Formula I or II:

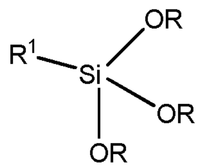

Formula (I)

$R^1$ =

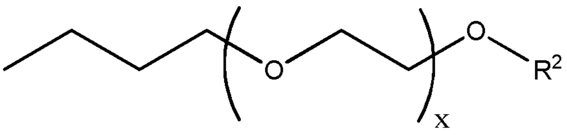

or

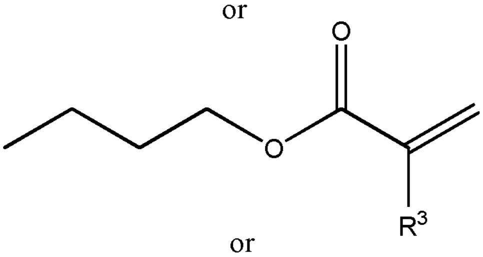

or

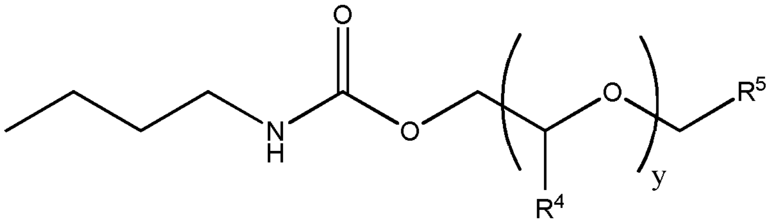

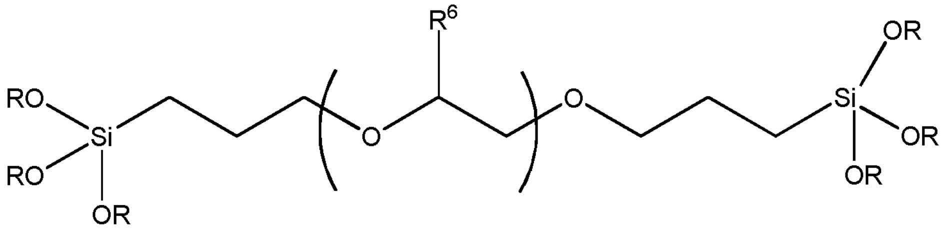

Formula (II)

R=1-12 alkyl carbon chain, either same or different
$R^1$ can be groups described under Formula (I) and also amino containing groups like - $CH_2CH_2CH_2NHCH_2CH_2NH_2$, Carbamates like $-CH_2CH_2CH_2NHC(O)OMe$,$-CH_2CH_2CH_2NHC(O)OEt$, Vinyl groups $-CH=CH_2$, $-C(CH_3)=CH_2$, Silanes containing vinyl & amide functionality like $(MeO)_a(EtO)_{3-a}$ $SiCH_2CH_2NHC(O)C(CH_3)=CH_2$, Vinyl ester silanes like $(i\text{-}PrO)_3SiCH_2CH_2CH_2OC(O)C(Me)=CH_2$, $(MeO)_3SiCH_2CH_2CH_2NHCH_2CH_2NHCH_2CH_2C(O)OMe$, $(i\text{-}PrO)_3SiCH_2CH_2CH_2OC(O)C(Me)=CH_2$ $(MeO)_3Si(CH_2)_3NHCH_2CH_2NH(CH_2)_3Si(OMe)_3$, $(EtO)_3SiCH_2CH_2CH_2OC(O)C(Me)=CH_2$ and also other silanes which contain amino, carbamate, ester, carboxylate functionalities and the combinations thereof.
$R^2$, $R^5$=$CO\text{-}CH_3$
$R^3$, $R^4$, $R^6$=H or $CH_3$
x=1-50; preferably 1-25 and more preferably between 5-15
y=1-50; preferably 1-25; more preferably between 2-15
z=1-50; preferably 1-25; more preferably between 5-15

In some preferred embodiments, the organofunctional silane moiety is 2-methoxy(polyethyleneoxy)$_{9\text{-}12}$ propyl trimethoxysilane, $\gamma$-methacryloxypropyltrimethoxysilane, 2-[(acetoxy(polyethyleneoxy)propyl]-triethoxysilane, tripropyleneglycol propyl ether carbamate silane, bis(3-triethoxysilylpropyl)polyethylene oxide, triethyleneglycol monobutyl ether carbamate silane, aminosilane, acrylate silane, N-beta-(aminoethyl)-gamma-aminopropyl-trimethoxy silane, [methoxy(polyethyleneoxy)propyl]-trimethoxysilane and combinations thereof.

The amount of the organofunctional silane moiety that surface-modifies the cerium oxide nanoparticles preferably ranges from 0.1 to 50 wt.%, based on the total weight of the cerium oxide nanoparticles, and more preferably ranges from 5 to 30 wt.%, based on the total weight of the cerium oxide nanoparticles.

The organic polymer component of the invention is not particularly limited. Suitable polymers useful in the composition of the invention include, but are not limited to, homo and copolymers of alkyl acrylates, polyurethanes, polycarbonates, urethane hexaacrylates, pentaerythritol triacrylates, polyvinylpyrrolidone, polyvinylbutyrals, poly(ethylene terephthalate), poly(butylene terephthalate), as well as combinations of these. In one preferred embodiment, the

organic polymer is polymethylmethacrylate. The amount of the organic polymer in the composition of the invention ranges preferably from about 0.5 to about 15 wt.%, more preferably from about 2 to about 10 wt.%, and most preferably from about 3 to about 8 wt.%, all based on the total weight of the composition.

In addition to the cerium oxide nanoparticles modified with an organofunctional silane moiety and an organic (e.g. acrylic) polymer described above, the primer composition of the invention includes a solvent. The solvent is not particularly limited. Exemplary solvent includes alcohols, such as methanol, ethanol, propanol, isopropanol, n-butanol, tert-butanol, methoxypropanol, ethylene glycol, diethylene glycol butyl ether, or combinations thereof. Other polar organic solvents such as acetone, methyl ethyl ketone, ethylene glycol monopropyl ether, and 2-butoxy ethanol, can also be utilized. In preferred embodiments, the solvent used is one or more selected from 1-methoxy-2-propanol, diacetone alcohol (DAA), acetyl acetone, cyclohexanone, methoxypropylacetate, ketones, glycol ether, and mixtures thereof. The amount of solvent in the composition of the invention ranges preferably from about 80 to about 99 wt.%, more preferably from about 85 to about 99 wt.%, and most preferably from about 90 to about 97 wt.%, all based on the total weight of the composition. The composition of the invention may further include optional additional additives such as UV absorbing agents, antiblushing agents, leveling agents, surface lubricants, antioxidants, light stabilizers, surfactants, IR absorbing agents, and combinations thereof.

The cerium oxide nanoparticles surface-modified with organofunctional silane moiety may be prepared by mixing the cerium oxide nanoparticles and organofunctional silane in a suitable solvent, removing water and solvent, for example, under vacuum to produce a viscous liquid or gel residue, and dissolving the residue in an organic solvent such as diacetone alcohol or 1-methoxy-2-propanol. The primer composition of this invention can be prepared by simply mixing the surface-modified nanoparticles, the acrylic polymer, and any optional ingredients in a solvent. The order of mixing of the components is not critical. The mixing can be achieved through any means known to a person skilled in the art, for example, milling, blending, stirring, and the like. The primer compositions with varying loading of surface-modified nanoparticles $CeO_2$ are found to be stable for several months or greater than 1 year.

The primer compositions of the invention can be suitably coated onto a polymeric substrate such as a plastic surface. Examples of such plastics include synthetic organic polymeric materials, such as acrylic polymers, for example, poly(methylmethacrylate), and the like; polyesters, for example, poly(ethylene terephthalate), poly(butylene terephthalate), and the like; polyamides, polyimides, acrylonitrile-styrene copolymer, styrene-acrylonitrile-butadiene terpolymers, polyvinyl chloride, polyethylene, and the like, polycarbonates, and copolycarbonates, high-heat polycarbonates.

The preferred substrate is formed of polycarbonate or an acrylic resin. Polycarbonates are especially preferred materials for transparent substrates because of their excellent physical, mechanical and chemical properties. In general, the choice of substrate is ultimately determined by the contemplated end use.

Once the primer composition of the invention is coated on a substrate by flow coat, dip coat, spin coat or any other methods known to a person skilled in the field, it is allowed to dry by removal of any solvents, for example by evaporation, thereby leaving a dry coating. Heating of the primer composition, to aid in evaporation of solvents, can be done up to a maximum temperature defined by the heat distortion temperature of the substrate to provide a primer layer that is free of solvent.

The primer layer formed from the primer composition of the invention is effective in providing adhesion of an abrasion resistant topcoat layer to a substrate and can be used as part of a coated article of the invention. Thus in accordance with another embodiment of the invention, there is provided a coated article including a polymeric substrate, a primer layer disposed on at least one surface of said substrate, and an abrasion-resistant silicone hardcoat layer disposed on said primer layer, wherein said primer layer is made from any of the primer composition of the invention disclosed herein.

A silicone hardcoat is formed by first applying a coating composition onto the primer layer, followed by curing the composition. The silicone hardcoat composition is not particularly limited. Silicone hardcoats comprised of a siloxanol resin/colloidal silica dispersions are one example of a coating composition that may be used as a topcoat. The silicone hardcoat may contain additional organic UV-absorbing agents if desired, but the loading can be lower than those that do not have inorganic absorbing agent in either the primer layer or the hardcoat layer. Thus the abrasion integrity is maintained and in some cases improved by limiting the amount of organic UV-absorbing agent, while at the same time, the weatherability is improved.

The following examples are illustrative and not to be construed as limiting of the invention as disclosed and claimed herein. All parts and percentages are by weight and all temperatures are degrees Celsius unless explicitly stated otherwise.

EXAMPLES

Preparation of $CeO_2$ Sols

**Comparative Example S-1: Preparation of surface functionalized cerium oxide sol using Polyethyleneoxypropyl trimethoxysilane (PEO silane)**

50g of cerium oxide dispersion (Aldrich, 20wt% aqueous, stabilized with 2.5% acetic acid) was placed in a round bottom flask equipped with a magnetic stir bar. 1.0g of PEO silane (Momentive Performance Materials, A1230) was then added drop wise to the cerium oxide dispersion followed by the addition of 40g of 1-methoxy-2-propanol. The addition of the solvent raised the temperature of the reaction mixture from 25°C to 34°C. After stirring the reaction mixture for 12hrs, volatile components were stripped out at 50°C under vacuum (30mbar). When the residue in the pot reached a solids of ~50wt% vacuum stripping was stopped. The final solids content of the ceria nanosol was 49.76%, the final water content was 26.7%. The sol appeared yellow in color, translucent and stable for several months.

**Comparative** Example S-2: Preparation of 15wt % Polyethyleneoxypropyl trimethoxysilane (PEO silane) Silane Modified Cerium Oxide Nanosol

100g of Cerium Oxide dispersion (Aldrich, 20wt% aqueous, stabilized with 2.5% acetic acid) was placed in a round bottom flask equipped with a magnetic stir bar. 3.0g of PEO silane (Momentive Performance Materials, A1230) was then added drop wise to the $CeO_2$ dispersion followed by the addition of 80 g of 1-methoxy-2-propanol. The addition of the solvent raised the temperature of the reaction mixture from 25°C to 34°C. Volatile components were then stripped out at 50°C under vacuum (30mbar). When the residue in the pot reached a solids of ~50wt% vacuum stripping was stopped. The final solids content of the ceria nanosol was 51.72%, the final water content was 25.6%. The sol appeared yellow in color, transparent and stable for several months.

**Example S-3: Synthesis of Triethyleneglycol monobutylether (TEGMBE) carbamate silane based ceria sol**

50g of Cerium Oxide dispersion (Nyacol, 20wt%, acetate stabilized, 10-20nm, pH3.0) was placed in a round bottom flask equipped with a magnetic stir bar. 2.0g of Triethyleneglycol monobutylether based carbamate silane (synthesized from Triethyleneglycol mono butyl ether and Isocyanatopropyl triethoxysilane) was added drop wise and stirred overnight at room temperature. 80 g of 1-methoxy-2-propanol was then added to the mixture and volatile components were stripped out at 50°C under vacuum (30mbar). When the residue in the pot reached a solids of ~33wt% vacuum stripping was stopped. The final solids content of the ceria nanosol was 32.39% and no water remaining in the solution. The sol was stable, transparent, and light yellow in color.

**Example S-4: Acetoxy polyethyleneoxy propyl trimethoxy silane based ceria sol**

20g of Cerium Oxide dispersion (Nyacol, 20wt%, acetate stabilized, 10-20nm, pH3.0) was placed in a round bottom flask equipped with a magnetic stir bar. 0.8g of Acetoxy polyethyleneoxy propyl trimethoxy silane (Gelest) was added drop wise and stirred overnight at room temperature. 35g of 1-methoxy-2-propanol was then added and volatile components were stripped out at 50°C under vacuum (30mbar). When the residue in the pot reached a solids of ~ 25% vacuum stripping was stopped. The ceria nanosol was a stable yellow transparent sol with a final solids content of 26.59% and no water remaining in the solution.

**Example S-5: Preparation of Surface Functionalized Cerium Oxide Sol using 5wt% γ-Methacryloxypropyl trimethoxysilane**

100g of Cerium Oxide dispersion (Aldrich, 20wt% aqueous, stabilized with 2.5% acetic acid) was placed in a round bottom flask equipped with a magnetic stir bar. 1.0g of γ-methacryloxypropyl trimethoxysilane (A174 Momentive Performance Materials) was added drop wise to the $CeO_2$ dispersion followed by the 80g of ethanol. After stirring the mixture for 5hrs at 80°C, the volatile components were stripped out at 50°C under vacuum (30mbar). The resulting residue was a gel that could be re-dissolved in diacetone alcohol to give a stable ceria sol. The final solids of the redissolved sol was 2.81wt%. The sol was dark brownish and translucent in appearance.

**Example S-6: Preparation of surface functionalized cerium oxide sol using 20wt% gamma-Methacryloxypropyl trimethoxysilane**

50g of Cerium Oxide dispersion (Aldrich, 20wt%, stabilized with 2.5wt% of acetic acid) was placed in a round bottom flask equipped with a magnetic stir bar. 2.0g of γ-methacryloxypropyl trimethoxysilane (Momentive Performance Materials, A174) was added drop wise. The reaction mixture was transformed in to a gel within 5 minutes of addition. About 40g of Dowanol was added to the reaction mixture to dissolve the gel and the volatile components were stripped out under vacuum (30mbar). Vacuum stripping was continued until the solids of the pot residue reached ~15wt%. 15 g of Diacetone alcohol was added to the reaction mixture and volatile removal under reduced pressure was continued. Stripping was stopped once the solids of the pot residue reached 20-22wt%. The final sol had solids of 22wt%, the final water content was 24.7%.

A related modified process helps to stabilize ceria in lower amount of DAA and successfully stabilized the modified ceria in mixture of MP and DAA solvents. The modification is essentially in the stripping of the solvent mixture as given below in example S-7.

**Example S-7: Preparation of surface functionalized cerium oxide sol using 20wt% gamma-Methacryloxypropyl trimethoxysilane Through Modified Solvent Exchange**

200g of Cerium Oxide dispersion (Aldrich, 20wt% solids, stabilized with 2.5% of acetic acid) was placed in a round bottom flask equipped with a magnetic stir bar. 8.0g of γ-methacryloxypropyl trimethoxysilane (from Momentive Performance Materials, A174) was added drop wise followed by of 175g of 1-methoxy-2-propanol. The reaction mixture was stirred at room temperature for 2 hours during which time it transformed it in to an opaque sol. 85g of volatile material was stripped from the reaction mixture under vacuum (290 mbar) at 70°C. An additional 80g 1-methoxy-2-propanol was added to the pot residue and the vacuum stripping was repeated to remove additional volatile components. This process was repeated a total of 3 times after which 30g of diacetone alcohol was added to give a stable, brown, translucent ceria sol (final yield of 105g), which had a final solids of 47%, and no water remaining in the solution. The size of the ceria nanoparticles in the sol was measured using dynamic light scattering (Figure 2). It was observed that 80% of the ceria particles had an average radius of 36 nm.

**Example S-8**

Examples S-5 was repeated to get a brownish yellow ceria sol in diacetone alcohol with final solids of 23.6wt%

**Example S-9: Preparation of surface functionalized cerium oxide sol using 20wt% $N^1$-(3-(trimethoxysilyl) propyl) ethane-1,2-diamine**

20g of Cerium Oxide dispersion (Aldrich, 20wt% aqueous, stabilized with 2.5% acetic acid) was placed in a round bottom flask equipped with a magnetic stir bar. 0.8g of $N^1$-(3-(trimethoxysilyl) propyl) ethane-1,2-diamine (from Momentive Performance Materials, A1120) was added drop wise to the $CeO_2$ dispersion followed by the 20g of methoxypropanol. A white precipitate which was formed initially dispersed after stirring for few minutes to give a translucent greenish sol. After stirring the mixture for 2hrs at 25C, 15g of 1-methoxy-2-propanol was added and the volatile components were stripped out at 50°C under vacuum (30mbar). 1 g of acetyl acetone was added to the residue to give a stable brown translucent sol with a final solids content of 8.8%.

**Comparative Example CS-1**

50g of Cerium Oxide dispersion (Aldrich, 20wt% solids, stabilized with 2.5% of acetic acid) was placed in a round bottom flask equipped with a magnetic stir bar. No silane was added during the process. 71g of 1-methoxy-2-propanol was then added and volatile components were stripped out at 50°C under vacuum (30mbar). When the residue in the pot reached solids of ~ 21% vacuum stripping was stopped. The ceria nanosol was opaque and straw yellow in color with solid particles which settled in few minutes. The final solids content was 20.79% the water content was 8.3%.

**Comparative Example CS-2**

25.13g of Cerium Oxide dispersion (Aldrich, 20wt% solids, stabilized with 2.5% of acetic acid) was placed in a round bottom flask equipped with a magnetic stir bar. 1.0g of Methyltrimethoxysilane (Momentive Performance Materials) was then added drop wise to the $CeO_2$ dispersion and stirred for 2 hours at room temperature. 35g of 1-methoxy-2-propanol was then added and volatile components were stripped out at 50°C under vacuum (30mbar). When the residue

in the pot reached solids of ~ 20% vacuum stripping was stopped. The ceria nanosol was translucent and greenish straw yellow in color with solid particles which settled out within a few minutes. The final solids content was 20.13%, the water content was 13.9%.

**Comparative Example CS-3**

20g of Cerium Oxide dispersion (Aldrich, 20wt% aqueous, stabilized with 2.5% acetic acid) was placed in a round bottom flask equipped with a magnetic stir bar. 0.8g of Glycidoxy propyl trimethoxy (from Momentive Performance Materials, A-187) silane was added drop wise to the $CeO_2$ dispersion followed by the 20g of 1-methoxy-2-propanol. After stirring the mixture for 2hrs at 25°C, an additional 15 g of 1-methoxy-2-propanol was added to the mixture and then the volatile components were stripped out at 50°C under vacuum (30mbar). The resulting concentrated sol showed the formation of a light yellow precipitate of ceria from the solution. The final solids content was 20%; no water remained in the solution.

Preparation of Primer Formulations

Various examples of primer formulations were prepared by mixing a PMMA solution with a given Cerium Oxide sol, and optionally, additional solvent and a flow control agent (Table 1 and Table 2). The PMMA solutions were prepared by dissolving PMMA resin in a mixture of 1-methoxy-2-propanol (85wt %) and diacetone alcohol (15wt %). Solvent dilutions were done with an 85:15 (weight ratio) mixture of 1-methoxy-2-propanol: diacetone alcohol. Components were combined in an appropriately sized glass or polyethylene bottle then shaken well to mix. Samples were allowed to stand for at least lhr prior to coating application.

Table 1. Formulation of Example Primer formulations

| Example | PMMA Solution | | $CeO_2$ Sol | | Solvent | BYK331 | Stability of Sol* | Stability* of Primer |
|---|---|---|---|---|---|---|---|---|
| | Solids | Charge (g) | Example | Charge (g) | Charge (g) | Charge (g) | | |
| 1** | 4.26% | 40.0 | S-1 | 0.38 | - | 0.017 | >12 months | >12 months |
| 2** | 4.26% | 40.0 | S-1 | 0.60 | - | 0.017 | >12 months | >12 months |
| 3** | 4.26% | 40.0 | S-1 | 0.84 | - | 0.017 | >12 months | >12 months |
| 4** | 4.26% | 40.0 | S-1 | 1.10 | - | 0.017 | >12 months | >12 months |
| 5** | 4.26% | 40.0 | S-1 | 1.44 | - | 0.017 | >12 months | >12 months |
| 6** | 4.26% | 40.0 | S-1 | 1.80 | - | 0.017 | >12 months | >12 months |
| 7** | 6.14% | 35.0 | S-2 | 1.45 | - | 0.017 | >12 months | >12 months |
| 8** | 6.14% | 35.0 | S-2 | 2.50 | - | 0.017 | >12 months | >12 months |
| 9 | 6.40% | 20.0 | S-3 | 1.70 | 8.5 | 0.017 | >12 months | >12 months |
| 10 | 6.40% | 20.0 | S-3 | 2.13 | 10.5 | 0.017 | >12 months | >12 months |
| 11 | 6.40% | 20.0 | S-4 | 2.07 | 8.5 | 0.017 | >12 months | >8 months |

(continued)

| Example | PMMA Solution | | $CeO_2$ Sol | | Solvent | BYK331 | Stability of Sol* | Stability* of Primer |
|---|---|---|---|---|---|---|---|---|
| | Solids | Charge (g) | Example | Charge (g) | Charge (g) | Charge (g) | | |
| 12 | 6.40% | 20.0 | S-4 | 2.59 | 10.5 | 0.017 | >12 months | >8 months |
| 13 | 5.10% | 50 | S-6 | 1.59 | | 0.0006 | >12 months | >12 months |
| 14 | 5.10% | 50 | S-6 | 2.18 | | 0.0006 | >12 months | >12 months |
| 15 | 5.10% | 50 | S-6 | 2.95 | | 0.0006 | >12 months | >12 months |
| 16 | 5.10% | 50 | S-6 | 3.86 | | 0.0006 | >12 months | >12 months |
| 17 | 5.10% | 50 | S-6 | 5 | | 0.0006 | >12 months | >12 months |
| 18 | 4.00% | 35 | S-7 | 0.46 | - | 0.017 | >12 months | >12 months |
| 19 | 4.00% | 35 | S-7 | 0.61 | - | 0.017 | >12 months | >12 months |
| 20 | 4.00% | 35 | S-7 | 0.76 | - | 0.017 | >12 months | >12 months |
| 21 | 4.00% | 35 | S-7 | 0.91 | - | 0.017 | >12 months | >12 months |
| Comparative example C-1 | Organic UVA containing primer | - | - | - | | | NA | >12 months |
| Comparative example C-2 | 5.56% | 20.0 | CS-1 | 0.74 | | 0.01 | Unstable <30min Opaque | Unstable <1min Opaque |
| Comparative example | 5.56% | 10.0 | CS-2 | 0.69 | | 0.01 | Unstable <30min Opaque | Unstable <1min Opaque |
| Comparative example C-4 | 5.56% | 8.3 | Aldrich | 0.866 | | 0.01 | Stable >2months | Unstable <2days |
| *"Stability" refers to the particle sedimentation/ phase separation was not seen under ambient storage conditions for the indicated time period. **: not according to the invention, Comparative Examples | | | | | | | | |

Table 2: Details of primer formulations for UV-Visible spectroscopy and Differential Scanning Calorimetric studies

| Example | PMMA Solution | | $CeO_2$ Sol | | BYK331 | Primer Stability |
|---|---|---|---|---|---|---|
| | Solids | Charge (g) | Example | Charge (g) | Charge (g) | |
| 22 | 5.99% | 50.1 | S-8 | 1.56 | 0.01 | Stable, >12months |
| 23 | 5.99% | 50.12 | S-8 | 2.20 | 0.01 | Stable, >12months |
| 24 | 5.99% | 30.19 | S-8 | 1.57 | 0.01 | Stable, >12months |

(continued)

| Example | PMMA Solution | | $CeO_2$ Sol | | BYK331 | Primer Stability |
|---|---|---|---|---|---|---|
| | Solids | Charge (g) | Example | Charge (g) | Charge (g) | |
| 25 | 5.99% | 35.23 | S-8 | 2.35 | 0.01 | Stable, >12months |
| 26 | 4.1% | 55.3 | S-5 | 5.10 | 0.0006 | Stable, >12months |
| 27 | 4.1% | 49.9 | S-5 | 10.78 | 0.0006 | Stable, >12months |
| 28 | 4.1% | 41.0 | S-5 | 20.43 | 0.0006 | Stable, >12months |

**Comparative Example C-1: Preparation of primer containing organic UV absorber**

To a 500 mL 3-neck round bottom flask (RBF) was added 41.85 g of diacetone alcohol and 237.15 g 1-methoxy-2-propanol. The RBF was fitted with a reflux condenser and an overhead stirrer. Stirring was started then 15.77 g of PMMA resin was added slowly through a powder funnel. The mixture was gently heated to reflux to dissolve the PMMA. After cooling back to room temperature, 5.20 g of 2,4-dibenzylresorcinol and 0.03 BYK331 were added to the PMMA solution and allowed to stir for ~ 1 hr. A total of 300.0 g of light yellow liquid was made. The solution had a solids content of 7.0wt%.

**Comparative Example C-2**

To 20g of a 5.56wt% PMMA solution was added 0.74g of CS-1 ceria sol along with 0.010g of BYK331. The primer mixture was shaken well to disperse the ceria sol which resulted in an opaque straw yellow formulation. The prepared formulation was unstable and became highly viscous along with the precipitation of the ceria particles.

**Comparative Example C-3**

To 10g of a 5.56wt % PMMA solution was added 0.69g of CS-2 ceria sol along with 0.010g of BYK331. The primer mixture was shaken well to disperse the ceria sol which resulted in an opaque straw yellow formulation.

**Comparative Example C-4**

To 8.3g of PMMA solution (5.56wt%), 0.866g of ceria sol (Aldrich, 20wt% solids, stabilized with 2.5% of acetic acid) was added drop wise followed by 0.01g of BYK331 and shaken vigorously. A gel of ceria formed with the addition of the ceria sol to the primer was dispersed by mashing with a spatula for several minutes, which resulted in a very sticky & viscous primer formulation with ceria dispersion.

Preparation of Coated Polycarbonate Panels

The primer formulations in Table 1 were coated on polycarbonate plates according to the following procedure. Polycarbonate (PC) plaques (6 × 6 × 0.3 cm) were cleaned with a stream of $N_2$ gas to remove any dust particles adhering to the surface followed by rinsing of the surface with iso-propanol. The plates are then allowed to dry inside the fume hood for 20min. The primer solutions were then applied to the PC plates by flow coating. The solvent in the primer coating solutions were allowed to flash off in the a fume hood for -20 minutes (22°C, 45%RH) and then placed in a preheated circulated air oven at 125°C for 45min. After cooling to room temperature, the primed PC plates were then flow coated with AS4700 hardcoat solution. After drying for ~20 minutes (22°C, 45% RH), the coated plates were placed in a preheated circulated air oven at 125°C for 45min.

Coated Properties

The optical characteristics (Transmission and Haze) were measured using a BYK Gardner haze guard instrument ASTM D1003. The initial adhesion was measured using a cross hatch adhesion test according to ASTM D3002/D3359. The adhesion is rated in a scale of 5B-0B, 5B indicative of highest adhesion. Adhesion after water immersion was done by immersing the coated PC plates in 65°C hot water followed by cross hatch adhesion test at different time intervals. The particle size of the ceria nanoparticles was measured using Viscotek-Dynamic light scattering instrument on 1% solution of the sols in 1-methoxy-2-propanol. The morphology of the coatings was studied using the

TEM - Tecnai make, on microtomed samples, under bright field transmitted mode.

Table 3: Coated properties of cerium oxide containing primers

| Example | wt% $CeO_2$* | wt% Water | % T | Haze | Adhesion | | |
|---|---|---|---|---|---|---|---|
| | | | | | Initial | Watersoak | Duration |
| 1** | 9.07 | 0.30 | 91.6 | 0.56 | 5B | 5B | ≥10days |
| 2** | 13.54 | 0.39 | 91.6 | 0.51 | 5B | 5B | ≥10days |
| 3** | 17.90 | 0.55 | 91.5 | 0.51 | 5B | 5B | ≥10days |
| 4** | 22.10 | 0.71 | 91.0 | 0.75 | 5B | 5B | ≥10days |
| 5** | 26.92 | 0.93 | 90.85 | 0.71 | 5B | 5B | ≥10days |
| 6** | 31.35 | 1.15 | 90.1 | 2.18 | 5B | 5B | ≥10days |
| 7** | 22.59 | 1.02 | 90.6 | 0.7 | 5B | 5B | ≥10days |
| 8** | 32.95 | 1.71 | 90.2 | 0.77 | 5B | 5B | ≥10days |
| 9 | 26.85 | 0.00 | 88.8 | 0.42 | 5B | 5B | ≥10days |
| 10 | 31.20 | 0.00 | 88.5 | 0.45 | 5B | 5B | ≥10days |
| 11 | 25.11 | 0.00 | 84 | 2.47 | 5B | 5B | ≥10days |
| 12 | 29.28 | 0.00 | 86.5 | 1.66 | 5B | 5B | ≥10days |
| 13 | 10.34 | 0.76 | 91.2 | 0.11 | 5B | 5B | ≥10days |
| 14 | 13.57 | 1.03 | 89.8 | 0.35 | 5B | 5B | ≥10days |
| 15 | 17.39 | 1.38 | 89.0 | 0.3 | 5B | 5B | ≥10days |
| 16 | 21.42 | 1.77 | 85.0 | 2.0 | 5B | 5B | ≥10days |
| 17 | 25.84 | 2.25 | 80.8 | 1.52 | 5B | 5B | ≥10days |
| 18 | 11.52 | 0.00 | 91.3 | 0.88 | 5B | 5B | ≥10days |
| 19 | 14.57 | 0.00 | 90.3 | 1.23 | 5B | 5B | ≥10days |
| 20 | 17.37 | 0.00 | 90.2 | 1.3 | 5B | 5B | ≥10days |
| 21 | 19.96 | 0.00 | 89.6 | 1.76 | 5B | 5B | ≥10days |
| C-1 | - | 0.00 | 91.8 | 0.69 | 5B | 5B | ≥10days |
| C-2 | 12.05 | 0.30 | 85.25 | 29.96 | 5B | 5B | ≥10days |
| C-3 | 17.32 | 0.90 | 85.92 | 32.24 | 5B | 5B | ≥10days |
| C-4 | 26.86 | 7.32 | 83.64 | 4.41 | 5B | 5B | ≥10days |

* % ceria in dry film = Total wt. of ceria x 100/Total solids
**: not according to the invention, Comparative Examples

$$\text{Total wt. of ceria in formulation} = \text{Ceria sol charge solids x A}/100$$

$$A = 100 - B;$$

$$B = C \times 100/(C + D)$$

A =Wt. % of ceria in the non-volatile fraction of the sol
B = Wt.% hydrolyzed silane in the non-volatile fraction of the sol
C = wt. of Silane hydrolyzate = no. of moles of silane x MW. of silane Hydrolyzed silane

D = Wt. of commercial aqueous ceria in sol preparation

The fraction of ceria present in the non-volatile fraction of the ceria sol added into the primer formulation is calculated as shown in Table 4.

Table 4: Details for calculating wt. % of ceria in the dry primer film

| **Sol** | **Silane** | **MW of silane** | **Wt. Of silane (g)** | **Wt.Of hydrolyzed silane (C) (g)** | **% hydrolyzed silane in non-volatile fraction of sol (B)** | **Wt. of ceria taken for sol preparation (D)** | **% of ceria in Non-volatile fraction of sol (A)** |
|---|---|---|---|---|---|---|---|
| S-1* | Polyethyleneoxypropyl trimethoxy silane | 525 | 1.00 | 0.92 | 8.42 | 10.00 | 91.58 |
| S-2* | Polyethyleneoxypropyl trimethoxy silane | 525 | 3.00 | 2.76 | 12.13 | 20.00 | 87.87 |
| S-3 | TEGMBE carbamate triethoxy silane | 354 | 2.00 | 1.53 | 13.24 | 10.00 | 86.76 |
| S-4 | Acetoxypropyltrimethoxy silane(500-700) | 600 | 0.80 | 0.74 | 15.68 | 4.00 | 84.32 |
| S-5 | Methacryloxy propyltrimethoxysilane | 248.35 | 1.00 | 0.83 | 3.99 | 20.00 | 96.01 |
| S-6 | Methacryloxy propyltrimethoxysilane | 248.35 | 2.00 | 1.66 | 14.25 | 10.00 | 85.75 |
| S-7 | Methacryloxy propyltrimethoxysilane | 248.35 | 8.00 | 6.65 | 14.25 | 40.00 | 85.75 |
| CS-2 | Methyl trimethoxy silane | 136.22 | 1.00 | 0.69 | 12.10 | 5.03 | 87.90 |
| *: Not according to the invention, Comparative Examples | | | | | | | |

The ceria sols prepared as mentioned in the examples S-3 to S-7 were all stable for more than a year with solids ranging from 20-50wt%. In general, all the sols appear light yellow to dark yellow in color and were transparent to translucent in appearance. For example, the sol prepared as in examples S-3 and S-4 were light to dark yellow colored and transparent in appearance whereas the sols in examples S-5 ,S-6, S-7 were brownish yellow and translucent. On the other hand, the sol described in the comparative example CS-1 was opaque and white in color with poor solution stability, with ceria precipitating within few hours of the preparation. Similar trend on the appearance and stability was observed in the case of comparative example CS-2. These observations clearly indicated that the silane modification of the ceria imparts very good stability and dispersion in organic solvents, which is essential for the preparation of stable primer formulations with high ceria loading.

The primer formulations prepared with ceria sols mentioned in examples S-3 to S-7 were stable in primer formulations at ceria loadings ranging from 10wt% to 35wt% in the dry film. The primer solution formulations were transparent and light yellow in color, with excellent stability for more than a year under ambient conditions. In contrast, primer formulations C-2 and C-3, prepared with ceria sols CS-1 and CS-2 respectively, were opaque and straw yellow in appearance. The primer solution formulations were unstable and the ceria completely precipitated within one day of initial formulation. The primer formulation CE-4 was stable and translucent but very viscous, which made it difficult to coat. This was likely due to the high water acting as an anti-solvent for the PMMA in solution.

The coatings made with the primer formulations containing ceria sols prepared in examples S-3 to S-7 showed very good transparency close to 90% and haze values less than one.

All the coated samples from examples 9-21 in Table 3 showed good initial adhesion rating of 5B and the adhesion after the water soak testing at 65°C was 5B for a minimum 10 days for all samples, with several stable even up to 30 days. The TEM analysis (Figure 3) of the coating (Example 8 (not according to the invention), Table 3) reveals a uniform distribution of ceria nanoparticles in the PMMA primer layer, which is necessary to give good optical characteristics even at high ceria loadings. It is evident that by using a silane functionalized ceria nano sol, it is possible to

incorporate ceria nanoparticle in the coating compositions without significantly affecting the optical and the adhesion properties in the coating assembly.

The average particle size of the ceria nanoparticles in the commercial unmodified aqueous sol is in the range of 5-40 nm. Up on surface functionalization, the particles are covered with the siloxane matrix which results in a slight increase in particle size. Further, the higher light transmission values of the final coatings are evidence that the particle size is below a minimum value for it to affect the final coatings optical properties. The hydrodynamic radius of the surface functionalized ceria nanoparticles was measured using Dynamic Light Scattering method. The results are tabulated for the commercial aqueous ceria sol and the modified ceria sols in the Table 5. The data supports the conclusion that modification the cerium oxide nano particle with the silanes found useful for this invention does not cause an increase in particle size that would cause the scattering of visible light.

Table 5: Particle size measurements as given by DLS method

| **Entry** | **Ceria sol** | **Average DLS Rh(Volume fraction)** |
|---|---|---|
| 1* | Commercial unmodified aqueous ceria sol | 5nm (63%), 22nm (37%) |
| 2* | 15% A1230 modified ceria sol (Example S-2) | 54nm (100%) |
| 3 | 20% A174 modified ceria sol (Example S-7) | 9nm (20%), 35nm (80%) |
| *: not according to the invention; Comparative Example | | |

UV absorption measurements:

Primer formulations examples 22 - 25, containing 5wt% methacryloxypropyltrimethoxysilane silane modified ceria (S-8), were prepared and coated over plain Corning glass slides. The glass slides were cleaned with water, wiped dry and then flow cleaned with IPA. The remaining IPA was flash dried by hanging the slides inside to fume hood for 20 minutes. The glass slides were flushed with a stream of nitrogen and them flow coated with the prepared formulations. After flashing the solvent for 20 minutes inside the fume hood, the slides were cured in an air oven at 125°C for 45 minutes. Each formulation had a different ceria loading as shown in Table 2. The UV absorption of these coated primer formulations was measured and compared with the primer formulation from comparative example C-1. Figure 1 shows the absorbance of these coatings (which contain 10-20wt% of ceria in primer matrix) at a thickness of ~2 microns. As illustrated in Figure. 1, the $CeO_2$ containing film at a ceria loading of 20wt% shows a similar absorbance value at 330nm compared to C-1 at 2.0 micron thickness.

Table 6: Ceria loading in primer formulations for UV absorption studies

| Example | Wt. % Ceria in coating |
|---|---|
| 22 | 10.45 |
| 23 | 14.10 |
| 24 | 16.23 |
| 25 | 19.88 |

Thermal properties:

Examples 26 - 28, primer formulations containing 5.68, 12.33, and 24.33 wt% respectively of methacryloxypropyltrimethoxysilane modified ceria (from sol example S-5) were prepared by mixing PMMA solution and Ceria sol and BYK331 as described for previous primer examples. A small portion, ~1g was then placed in an aluminum cup and heated at 125°C for 45 minutes to produce solid flakes of the primer. DSC was performed on the solid materials to measure the $T_g$ of the solid. Comparative example C-1 which contains ~25% of organic UV absorber and that of pure PMMA were prepared in a similar fashion and were also examined using DSC. The ceria loading and $T_g$ values are shown in Table 7.

Table 7: Primer formulation, ceria loading and $T_g$ values for primer films containing nanoceria.

| Example | % ceria | Tg (°C) |
|---|---|---|
| 26 | 5.68 | 120 |

(continued)

| Example | % ceria | Tg (°C) |
|---|---|---|
| 27 | 12.33 | 118 |
| 28 | 24.33 | 117 |
| c-1* | - | 81 |
| PMMA* | 0% | 124 |
| *Comparative Example | | |

The $T_g$ of pure PMMA was around 124°-121°C, which reduces to 81°C in the presence of organic UV absorber as indicated by the Tg in comparative example C-1. On the other hand, primer formulations in examples 26, 27 & 28 in Table 5 show Tg values of 120, 118 & 117 respectively, showing a minimal deviation from the glass transition temperature of PMMA even at 24 wt% ceria loading. This offers the advantage of allowing higher service temperature conditions with the Ceria containing primer over the organic UV absorber containing primers.

## Claims

**1.** A primer composition, comprising:

(a) cerium oxide nanoparticles surface-modified with an organofunctional silane moiety, said organofunctional silane moiety having the structure of Formula I or II:

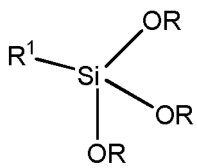

Formula (I)

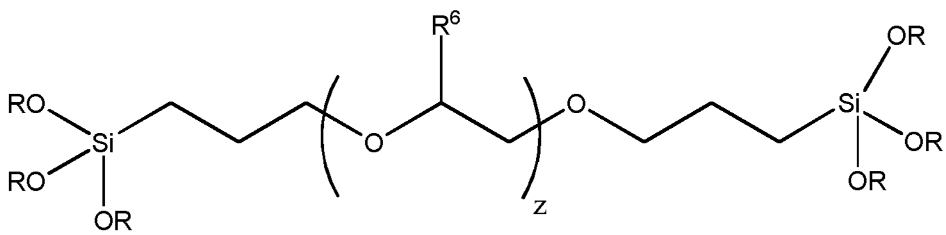

Formula (II)

wherein in Formula (I), $R^1$ is

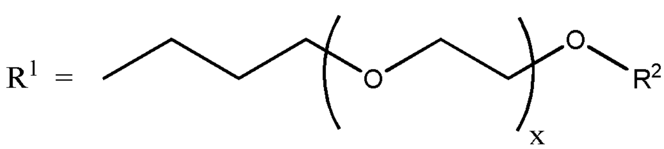

or

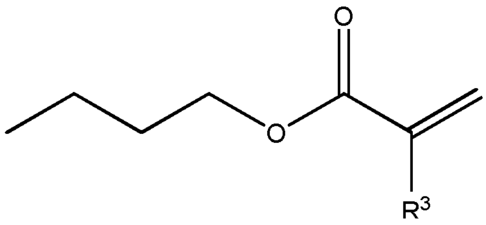

or

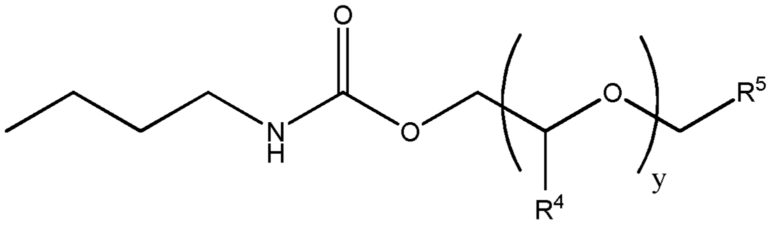

or wherein $R^1$ is a functional group-containing moiety, wherein said functional group-containing moiety of $R^1$ is selected from amino, carbamate, vinyl, amide, ester, carboxylate, and combinations thereof; wherein each R is an alkyl group having from 1 to 12 carbon atoms; wherein each $R^2$ and $R^5$ is independently $-CO-CH_3$; wherein each $R^3$, $R^4$ and $R^6$ is independently hydrogen or methyl; and, wherein x, y and z are each an integer independently selected from 1 to 50,
(b) an organic polymer; and
(c) one or more solvents.

**2.** The primer composition of claim 1, wherein said functional group $R^1$ is selected from $-CH_2CH_2CH_2NHCH_2CH_2NH_2$, $-CH_2CH_2CH_2NHC(O)OMe$, - $CH_2CH_2CH_2NHC(O)OEt$, $-CH=CH_2$, $-C(CH_3)=CH_2$, or wherein the organofunctional silane moiety is selected from $(MeO)_a(EtO)_{3-a}$ $SiCH_2CH_2NHC(O)C(CH_3)=CH_2$, $(i\text{-}PrO)_3SiCH_2CH_2CH_2OC(O)C(Me)=CH_2$, $(MeO)_3SiCH_2CH_2CH_2NHCH_2CH_2NHCH_2CH_2C(O)OMe$, $(i\text{-}PrO)_3SiCH_2CH_2CH_2OC(O)C(Me)=CH_2$, $(MeO)_3Si(CH_2)_3NHCH_2CH_2NH(CH_2)_3Si(OMe)_3$, $(EtO)_3SiCH_2CH_2CH_2OC(O)C(Me)=CH_2$, and combinations thereof.

**3.** The primer composition of claim 1, wherein x, y and z are independently integers from 1 to 25.

**4.** The primer composition of claim 1, wherein x, y and z are independently integers from 2 to 15.

**5.** The primer composition of claim 1, wherein said organofunctional silane moiety is selected from the group consisting of 2-methoxy(polyethyleneoxy)$_{9\text{-}12}$ propyl trimethoxysilane, γ-methacryloxypropyltrimethoxysilane, 2-[(acetoxy(polyethyleneoxy)propyl]-triethoxysilane, tripropyleneglycol propyl ether carbamate silane, bis(3-triethoxysilylpropyl)polyethylene oxide, triethyleneglycol monobutyl ether carbamate silane, aminosilane,, , acrylate silane, N-beta-(aminoethyl)-gamma-aminopropyl-trimethoxy silane,, [methoxy(polyethyleneoxy)propyl]-trimethoxysilane, and combinations thereof.

**6.** The primer composition of claim 1, wherein said organic polymer is selected from the group consisting of homo and copolymers of alkyl acrylates, polyurethanes, polycarbonates, urethane hexaacrylates, pentaerythritol triacrylates, polyvinylbutyrals, poly(ethylene terephthalate), poly(butylene terephthalate), and combinations thereof.

**7.** The primer composition of claim 6, wherein said organic polymer is polymethylmethacrylate.

**8.** The primer composition of claim 1, wherein said solvent is selected from the group consisting of 1-methoxy-2-propanol, diacetone alcohol, acetylacetone, cyclohexanone, methoxypropylacetate, ketones, glycol ether, aromatic hydrocarbons, saturated hydrocarbons, and mixtures thereof.

**9.** The primer composition of claim 1 which additionally contains water in an amount of from 0.1 to 4 wt%, based on the total weight of said primer composition.

**10.** The primer composition of claim 9, wherein said water is present in an amount of less than 2 wt%, based on the total weight of said primer composition.

**11.** The primer composition of claim 9, wherein the weight ratio of water to cerium oxide in said composition is 0.01 to 0.08.

**12.** The primer composition of claim 9, wherein said silane moiety comprises from 0.1 to 50wt%, based on the total weight of said cerium oxide nanoparticles, wherein said solvent comprises from 80 to 99 wt%, based on the total weight of the composition, and wherein said cerium oxide nanoparticles surface-modified with an organofunctional silane moiety comprise from 0.1 to 10 wt%, based on the total weight of the composition.

**13.** A primer film on a substrate, comprising:

(a) 0.1 to 50 wt% of cerium oxide nanoparticles surface-modified with an organofunctional silane moiety, said organofunctional silane moiety having the structure of Formula I or II:

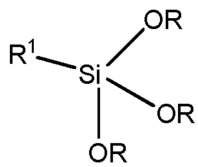

Formula (I)

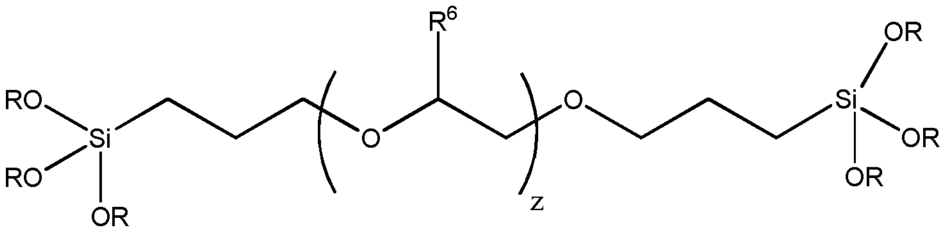

Formula (II)

wherein in Formula (I), $R^1$ is

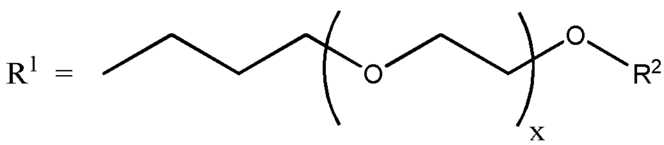

or

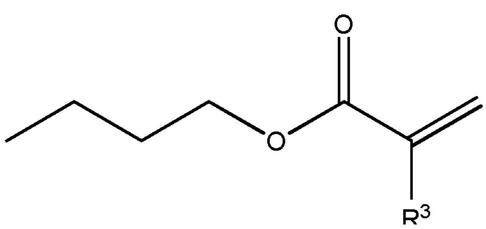

or

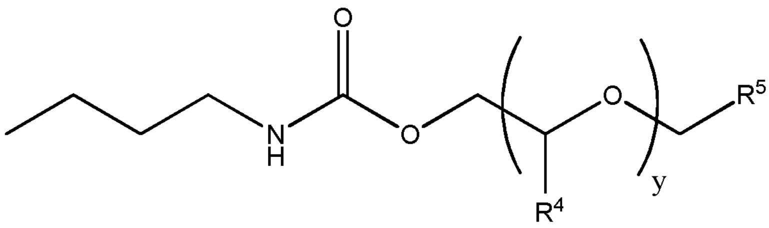

or wherein $R^1$ is a functional group-containing moiety, wherein said functional group-containing moiety of $R^1$ is selected from amino, carbamate, vinyl, amide, ester, carboxylate, and combinations thereof; wherein each R is an alkyl group having from 1 to 12 carbon atoms; wherein each $R^2$ and $R^5$ is independently $-CO-CH_3$; wherein each $R^3$, $R^4$ and $R^6$ is independently hydrogen or methyl; and, wherein x, y and z are each an integer independently selected from 1 to 50, and

(b) 50 to 99 wt% of an organic polymer,

said weight percents being based on the total weight of said film.

## Patentansprüche

**1.** Eine Grundierungszusammensetzung, die umfasst:

(a) Ceroxid-Nanopartikel, die mit einer organofunktionellen Silangruppe oberflächenmodifiziert sind, wobei die genannte organofunktionelle Silangruppe die Struktur der Formel I oder II aufweist:

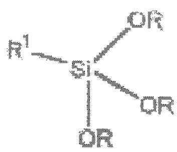

Formel (I)

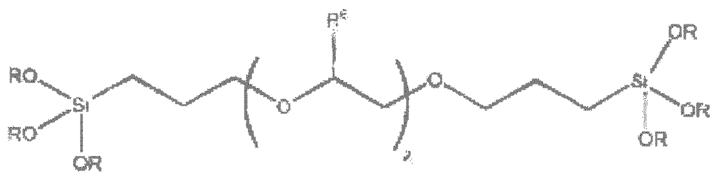

Formel (II)

worin in Formel (I) $R^1$

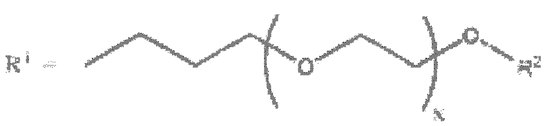

oder

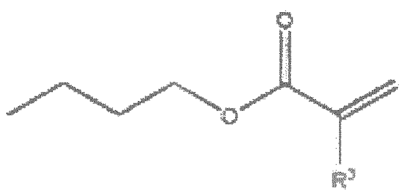

oder

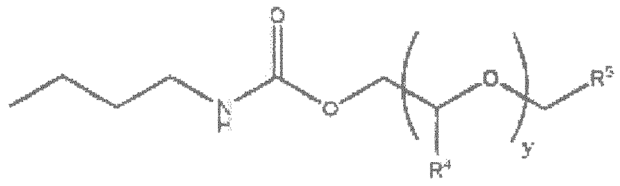

ist,

oder worin $R^1$ eine eine funktionelle Gruppe enthaltende Gruppe ist, wobei die genannte eine funktionelle Gruppe enthaltende Gruppe von $R^1$ aus einer Amino-, Carbamat-, Vinyl-, Amid-, Ester-, Carboxylatgruppe und Kombinationen davon ausgewählt ist;
worin jedes R eine Alkylgruppe mit 1 bis 12 Kohlenstoffatomen ist; worin jedes $R^2$ und $R^5$ in unabhängiger Weise $-CO-CH_3$ ist; worin jedes $R^3$, $R^4$ und $R^6$ in unabhängiger Weise eine Wasserstoffgruppe oder Methylgruppe ist; und worin x, y und z jeweils eine ganze Zahl sind, die in unabhängiger Weise aus 1 bis 50 ausgewählt ist,

(b) ein organisches Polymer; und
(c) ein oder mehr Lösungsmittel.

**2.** Die Grundierungszusammensetzung gemäß Anspruch 1, wobei die genannte funktionelle Gruppe $R^1$ aus $-CH_2CH_2CH_2NHCH_2CH_2NH_2$, $-CH_2CH_2CH_2NHC(O)OMe$, $-CH_2CH_2CH_2NHC(O)OEt$, $-CH=CH_2$, $-C(CH_3)=CH_2$ ausgewählt ist, oder wobei die organofunktionelle Silangruppe aus $(MeO)_a(EtO)_{3-a}SiCH_2CH_2NHC(O)C(CH_3)=CH_2$, $(i\text{-}PrO)_3SiCH_2CH_2CH_2OC(O)C(Me)=CH_2$, $(MeO)_3SiCH_2CH_2CH_2NHCH_2CH_2NHCH_2CH_2CH_2C(O)OMe$, $(i\text{-}PrO)_3SiCH_2CH_2CH_2OC(O)C(Me)=CH_2$, $(MeO)_3Si(CH_2)_3NHCH_2CH_2NH(CH_2)_3Si(OMe)_3$, $(EtO)_3SiCH_2CH_2CH_2OC(O)C(Me)=CH_2$, und Kombinationen daraus ausgewählt ist.

**3.** Die Grundierungszusammensetzung gemäß Anspruch 1, wobei x, y und z in unabhängiger Weise ganze Zahlen von 1 bis 25 sind.

**4.** Die Grundierungszusammensetzung gemäß Anspruch 1, wobei x, y und z in unabhängiger Weise ganze Zahlen von 2 bis 15 sind.

**5.** Die Grundierungszusammensetzung gemäß Anspruch 1, wobei die genannte organofunktionelle Silangruppe aus der Gruppe ausgewählt ist, die aus 2-Methoxy(polyethylenoxy)$_{9-12}$propyltrimethoxysilan, γ-Methacryloxypropyltrimethoxysilan, 2-[(Acetoxy(polyethylenoxy)propyl]-triethoxysilan, Tripropylenglycolpropylethercarbamatsilan, Bis(3-triethoxysilylpropyl)polyethylenoxid, Triethylenglycolmonobutylethercarbamatsilan, Aminosilan, Acrylatsilan, N-beta-(Aminoethyl)-gamma-aminopropyltrimethoxysilan, [Methoxy(polyethylenoxy)propyl]-trimethoxysilan, und Kombinationen daraus besteht.

**6.** Die Grundierungszusammensetzung gemäß Anspruch 1, wobei das genannte organische Polymer aus der Gruppe ausgewählt ist, die aus Homo- und Copolymeren von Alkylacrylaten, Polyurethanen, Polycarbonaten, Urethanhexaacrylaten, Pentaerythritoltriacrylaten, Polyvinylbutyralen, Poly(ethylenterephthalat), Poly(butylenterephthalat), und Kombinationen daraus besteht.

**7.** Die Grundierungszusammensetzung gemäß Anspruch 6, wobei das genannte organische Polymer Polymethylmethacrylat ist.

**8.** Die Grundierungszusammensetzung gemäß Anspruch 1, wobei das genannte Lösungsmittel aus der Gruppe ausgesucht ist, die aus 1-Methoxy-2-propanol, Diacetonalkohol, Acetylaceton, Cyclohexanon, Methoxypropylacetat, Ketonen, Glycolether, aromatischen Kohlenwasserstoffen, gesättigten Kohlenwasserstoffen, und Mischungen daraus besteht.

**9.** Die Grundierungszusammensetzung gemäß Anspruch 1, die zusätzlich Wasser in einer Menge von 0,1 bis 4 Gew.-% auf der Grundlage des Gesamtgewichts der genannten Grundierungszusammensetzung enthält.

**10.** Die Grundierungszusammensetzung gemäß Anspruch 9, wobei das genannte Wasser in einer Menge von weniger als 2 Gew.-% auf der Grundlage des Gesamtgewichts der genannten Grundierungszusammensetzung vorliegt.

**11.** Die Grundierungszusammensetzung gemäß Anspruch 9, wobei das Gewichtsverhältnis von Wasser zu Ceroxid in der genannten Zusammensetzung 0,01 bis 0,08 beträgt.

**12.** Die Grundierungszusammensetzung gemäß Anspruch 9, wobei die genannte Silangruppe 0,1 bis 50 Gew.-% auf der Grundlage des Gesamtgewichts der genannten Ceroxid-Nanopartikel umfasst, wobei das genannte Lösungsmittel von 80 bis 99 Gew.-% auf der Grundlage des Gesamtgewichts der Zusammensetzung umfasst, und wobei die genannten mit einer organofunktionellen Silangruppe oberflächenmodifizierten Ceroxid-Nanopartikel von 0,1 bis 10 Gew.-% auf der Grundlage des Gesamtgewichts der Zusammensetzung umfassen.

**13.** Eine Grundierungsschicht auf einem Substrat, die umfasst:

(a) 0,1 bis 50 Gew.-% der mit einer organofunktionellen Silangruppe oberflächenmodifizierten Ceroxid-Nanopartikel, wobei die genannte organofunktionelle Silangruppe die Struktur der Formel I oder II aufweist:

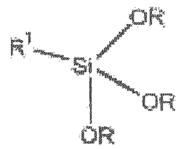

Formel (I)

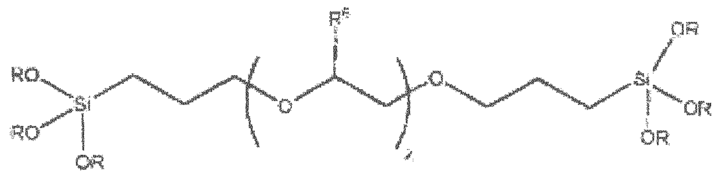

Formel (II)

worin in Formel (I) $R^1$

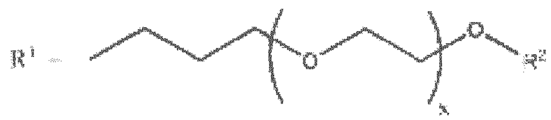

oder

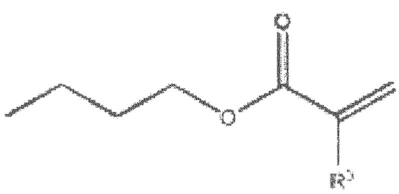

oder

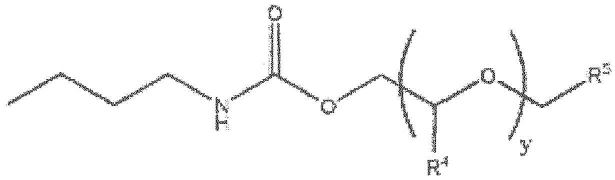

ist,

oder worin $R^1$ eine eine unktionelle Gruppe enthaltende Gruppe ist, wobei die genannte eine funktionelle Gruppe enthaltende Gruppe von $R^1$ aus einer Amino-, Carbamat-, Vinyl-, Amid-, Ester-, Carboxylatgruppe und Kombinationen derselben ausgewählt ist;
worin jedes R eine Alkylgruppe mit 1 bis 12 Kohlenstoffatomen ist; worin jedes $R^2$ und $R^5$ in unabhängiger Weise -CO-$CH_3$ ist; worin jedes $R^3$, $R^4$ und $R^6$ in unabhängiger Weise eine Wasserstoffgruppe oder Methylgruppe ist; und worin x, y und z jeweils eine ganze Zahl sind, die in unabhängiger Weise aus 1 bis 50 ausgewählt ist, und

(b) 50 bis 99 Gew.-% eines organischen Polymers,
wobei die genannten Gewichts-Prozente sich auf das Gesamtgewicht des genannten Films beziehen.

## Revendications

**1.** Composition de primaire, comprenant :

(a) des nanoparticules d'oxyde de cérium modifiées en surface par un fragment silane organofonctionnel, ledit fragment silane organofonctionnel ayant la structure de Formule I ou II :

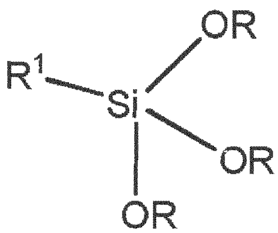

Formule (I)

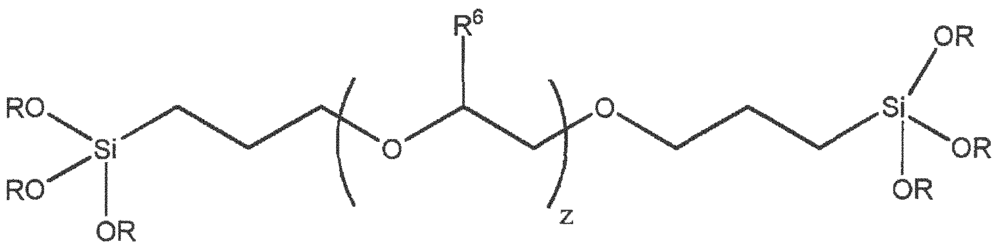

Formule (II)

où dans la Formule (I), $R^1$ représente

$R^1$ = 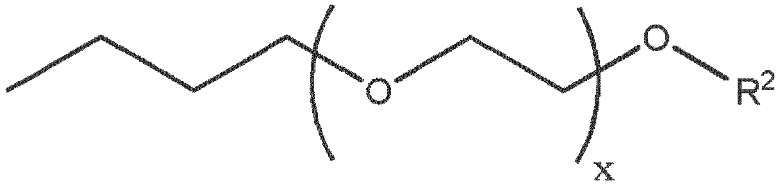

ou

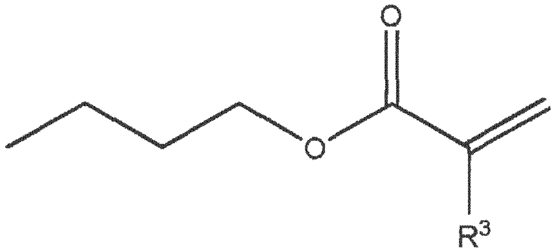

ou

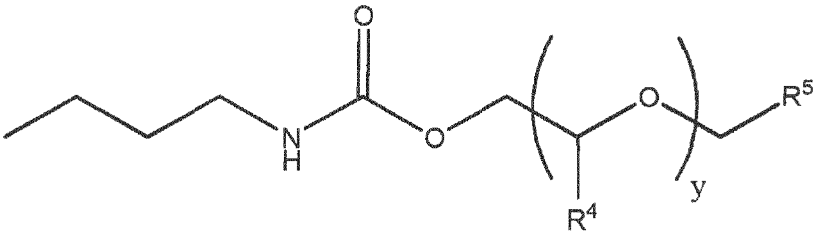

ou où $R^1$ représente un fragment contenant un groupe fonctionnel, où ledit fragment contenant un groupe fonctionnel de $R^1$ est choisi parmi un amino, un carbamate, un vinyle, un amide, un ester, un carboxylate et des combinaisons de ceux-ci ; où chaque R représente un groupe alkyle ayant 1 à 12 atome(s) de carbone ; où chaque $R^2$ et $R^5$ représente indépendamment $-CO-CH_3$ ; où chaque $R^3$, $R^4$ et $R^6$ représente indépendamment un hydrogène ou un méthyle ; et, où x, y et z représentent chacun un nombre entier indépendamment choisi entre 1 et 50,

(b) un polymère organique ; et

(c) un ou plusieurs solvant(s).

2. Composition de primaire de la revendication 1, dans laquelle ledit groupe fonctionnel $R^1$ est choisi parmi $-CH_2CH_2CH_2NHCH_2CH_2NH_2$, $-CH_2CH_2CH_2NHC(O)OMe$, $-CH_2CH_2CH_2NHC(O)OEt$, $-CH=CH_2$, $-C(CH_3)=CH_2$, ou dans laquelle le fragment silane organofonctionnel est choisi parmi $(MeO)_a(EtO)_{3-a}SiCH_2CH_2NHC(O)C(CH_3)=CH_2$, $(i-PrO)_3SiCH_2CH_2CH_2OC(O)C(Me)=CH_2$, $(MeO)_3SiCH_2CH_2CH_2NHCH_2CH_2NHCH_2OH_2C(O)OMe$, $(i-PrO)_3Si\ CH_2CH_2CH_2OC(O)C(Me)=CH_2$, $(MeO)_3Si(CH_2)_3NHCH_2CH_2NH(CH_2)_3Si(OMe)_3$, $(EtO)_3SiCH_2CH_2CH_2OC(O)C(Me)=CH_2$, et des combinaisons de ceux-ci.

3. Composition de primaire de la revendication 1, dans laquelle x, y et z représentent indépendamment des nombres entiers de 1 à 25.

4. Composition de primaire de la revendication 1, dans laquelle x, y et z représentent indépendamment des nombres entiers de 2 à 15.

5. Composition de primaire de la revendication 1, dans laquelle ledit fragment silane organofonctionnel est choisi dans le groupe constitué par le 2-méthoxy(polyéthylèneoxy)$_{9-12}$ propyl-triméthoxysilane, le γ-méthacryloxypropyltriméthoxysilane, le 2-[(acétoxy(polyéthylèneoxy)propyl]-triéthoxysilane, le carbamate-silane à base de tripropylèneglycol propyléther, l'oxyde de bis(3-triéthoxysilylpropyl)polyéthylène, le carbamate-silane à base de triéthylèneglycol monobutyléther, l'aminosilane, l'acrylate-silane, le N-bêta-(aminoéthyl)-gamma-aminopropyl-triméthoxysilane, le [méthoxy(polyéthylèneoxy)propyl]-triméthoxysilane, et des combinaisons de ceux-ci.

**6.** Composition de primaire de la revendication 1, dans laquelle ledit polymère organique est choisi dans le groupe constitué d'homopolymères et de copolymères d'acrylates d'alkyle, de polyuréthanes, de polycarbonates, d'hexaacrylates d'uréthane, de triacrylates de pentaérythritol, de polyvinylbutyrals, de poly(éthylène téréphtalate), de poly(butylène téréphtalate) et de combinaisons de ceux-ci.

**7.** Composition de primaire de la revendication 6, dans laquelle ledit polymère organique est du polyméthacrylate de méthyle.

**8.** Composition de primaire de la revendication 1, dans laquelle ledit solvant est choisi dans le groupe constitué par le 1-méthoxy-2-propanol, le diacétone-alcool, l'acétylacétone, la cyclohexanone, le méthoxypropylacétate, des cétones, un éther de glycol, des hydrocarbures aromatiques, des hydrocarbures saturés et des mélanges de ceux-ci.

**9.** Composition de primaire de la revendication 1 qui contient en outre de l'eau en une quantité allant de 0,1 à 4% en poids, par rapport au poids total de ladite composition de primaire.

**10.** Composition de primaire de la revendication 9, dans laquelle ladite eau est présente en une quantité inférieure à 2% en poids, par rapport au poids total de ladite composition de primaire.

**11.** Composition de primaire de la revendication 9, dans laquelle le rapport en poids eau/oxyde de cérium dans ladite composition est de 0,01 à 0,08.

**12.** Composition de primaire de la revendication 9, dans laquelle ledit fragment silane est présent à raison de 0,1 à 50% en poids, par rapport au poids total desdites nanoparticules d'oxyde de cérium, où ledit solvant est présent à raison de 80 à 99% en poids, par rapport au poids total de la composition, et où lesdites nanoparticules d'oxyde de cérium modifiées en surface par un fragment silane organofonctionnel sont présentes à raison de 0,1 à 10% en poids, par rapport au poids total de la composition.

**13.** Film de primaire sur un substrat, comprenant :

(a) 0,1 à 50% en poids de nanoparticules d'oxyde de cérium modifiées en surface par un fragment silane organofonctionnel, ledit fragment silane organofonctionnel ayant la structure de Formule I ou II :

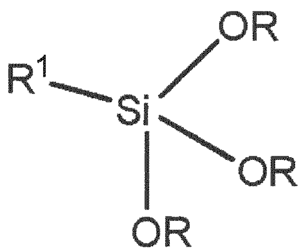

Formule (I)

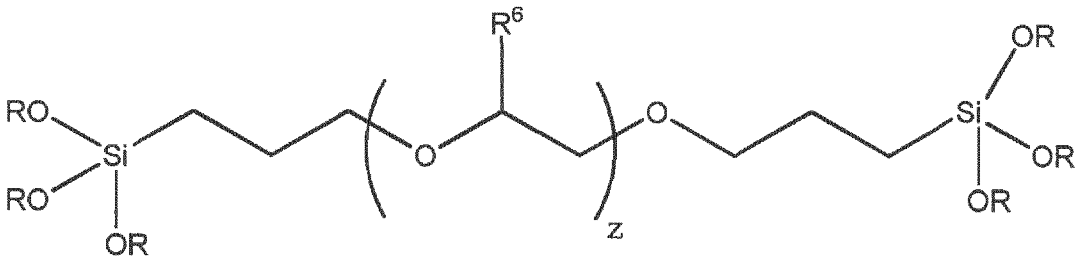

Formule (II)

où, dans la Formule (I), $R^1$ représente

$R^1$ = 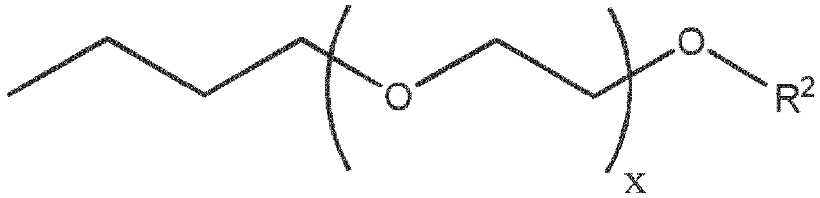

ou

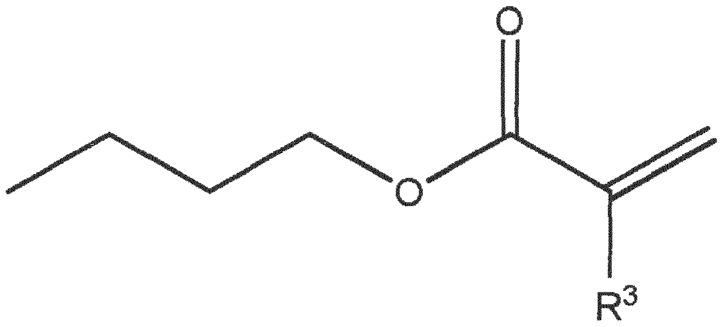

ou

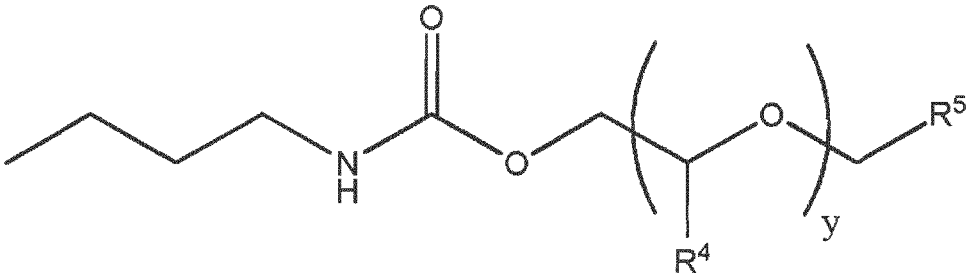

ou où $R^1$ représente un fragment contenant un groupe fonctionnel, où ledit fragment contenant un groupe fonctionnel de $R^1$ est choisi parmi un amino, un carbamate, un vinyle, un amide, un ester, un carboxylate et des combinaisons de ceux-ci ; où chaque R représente un groupe alkyle ayant 1 à 12 atome(s) de carbone ; où chaque $R^2$ et $R^5$ représente indépendamment $-CO-CH_3$ ; où chaque $R^3$, $R^4$ et $R^6$ représente indépendamment un hydrogène ou un méthyle ; et, où x, y et z représentent chacun un nombre entier indépendamment choisi entre 1 et 50, et

(b) 50 à 99% en poids d'un polymère organique,

lesdits pourcentages en poids étant basés sur le poids total dudit film.

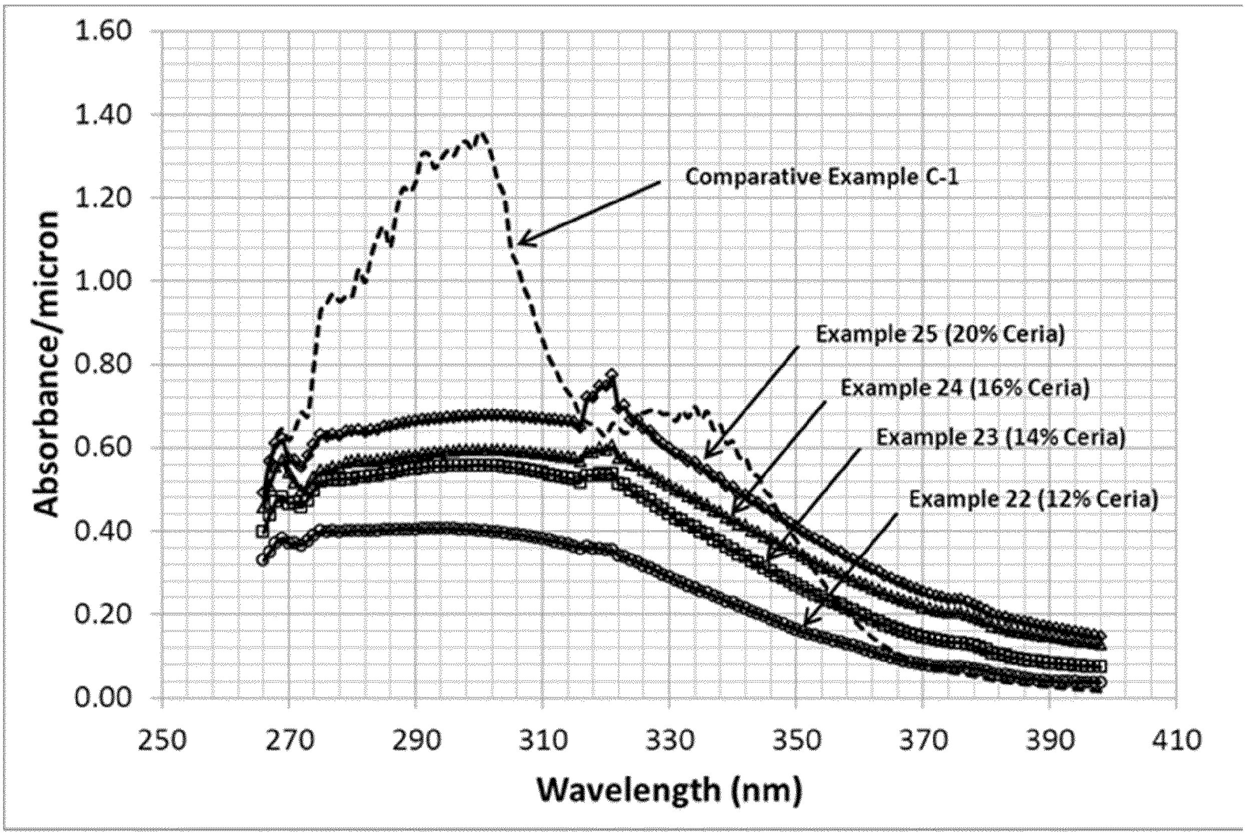
1.60
1.40
1.20
1.00
0.80
0.60
0.40
0.20
0.00
Absorbance/micron
250
270
290
310
330
350
370
390
410
Wavelength (nm)
Comparative Example C-1
Example 25 (20% Ceria)
Example 24 (16% Ceria)
Example 23 (14% Ceria)
Example 22 (12% Ceria)

Figure 1

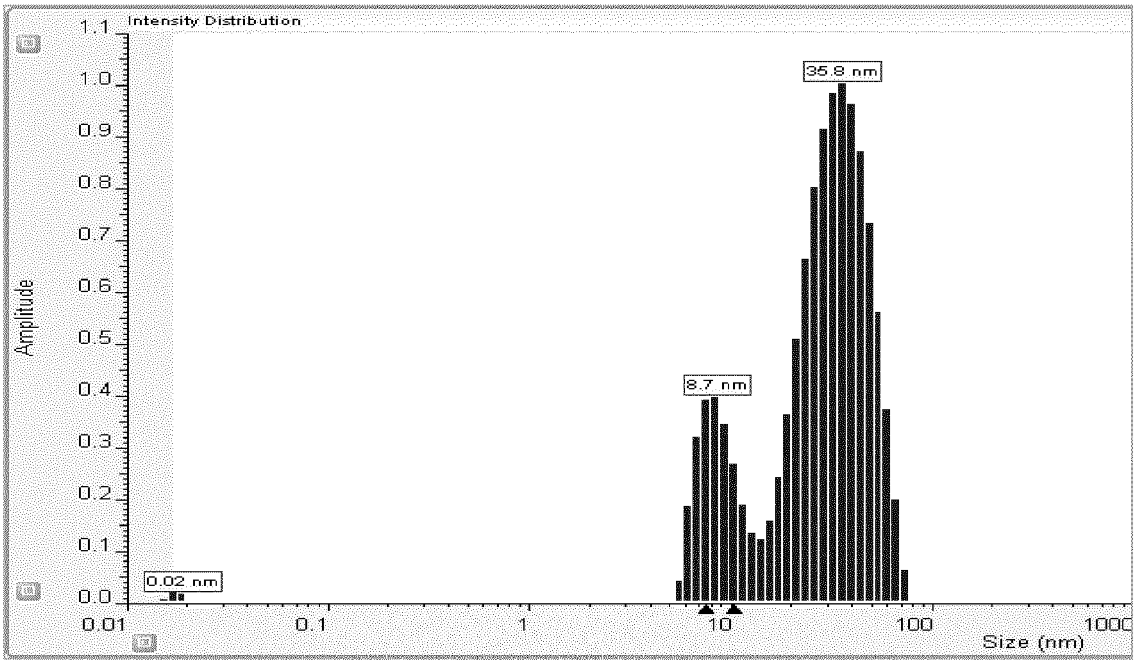


Figure 2

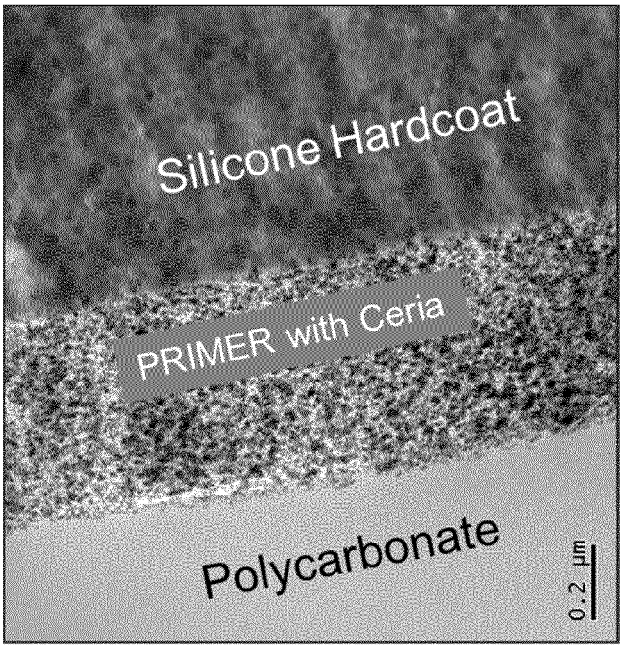


Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006073856 A2
- EP 0732356 A2